# EUROPEAN PATENT APPLICATION

(11) **EP 3 821 976 A1**
(43) Date of publication of application: **19.05.2021**
(21) Application number: 20206773.2
(22) Date of filing: 10.11.2020
(51) Int. Cl.: B01J 19/12, B01J 19/28

(54) **LIGHT IRRADIATION APPARATUS**

(30) Priority: 12.11.2019 JP 2019204513
(71) Applicant: Cellsystem Co., Ltd., Yokohama-shi, Kanagawa 225-0012 (JP)
(72) Inventor: WATARI, Osamu, Kanagawa, 225-0012 (JP); TONO, Kenta, Kanagawa, 225-0012 (JP)
(74) Representative: Pfenning, Meinig & Partner mbB

(57) **Abstract**

An object is to provide a light irradiation apparatus irradiating a light to a sample in a reaction vessel while stirring the sample more efficiently. A rotating stage can rotate around a first axis being a central axis thereof. A holding mechanism holds reaction vessels whose longitudinal directions are a direction of the central axis on a circumference around the first axis on the rotating stage at equal intervals. Rotation mechanisms hold bottoms of the reaction vessels and rotate the reaction vessels around second axes being central axes of the reaction vessels, respectively. Light irradiation mechanisms are arranged on a circumference outside of the rotating stage and at least one light emitting diode is disposed in each light irradiation mechanism. Stirring mechanisms are arranged in the vicinity of the reaction vessels and rotate stir bars around axes of directions orthogonal to the second axes by magnetic force, respectively.

## Description

### BACKGROUND

The present disclosure relates to a light irradiation apparatus, especially to a light irradiation apparatus irradiating a light to a reaction vessel.

A light irradiation apparatus irradiating a light to a reaction vessel such as a test tube that is filled with a sample is used in order to perform an experiment of photocatalytic reaction or reaction requiring light irradiation such as the photocatalytic reaction. For example, an apparatus irradiating ultraviolet ray emitted from a mercury lamp to the sample in the test tube has been well known ("Photocatalytic Reaction Apparatus", Koike Precision Instruments, URL: http://www.k-p-i.net/product/photocatalystreactor/reaction/, http://www.k-p-i.net/wp/wp-content/uploads/2017/02/photocatalystreacto r.pdf). This apparatus includes a plurality of test tubes arranged around the central mercury lamp and can simultaneously irradiate the ultraviolet ray to these test tubes. A cooling mechanism to flow cooling water is also disposed in the apparatus to remove heat generated by the mercury lamp.

Further, to avoid an effect due to the heat generated by the mercury lamp, a configuration in which the mercury lamp is replaced with a LED (Light Emitting Diode) has been proposed (Published Japanese Translation of PCT International Publication for Patent Application, No. 2017-529236). Since the LED generates much less heat than the mercury lamp, cooling with the cooling water is not necessary and air cooling is possible. Therefore, it is possible to miniaturize the cooling mechanism and thus to suppress the entire size of the apparatus.

### SUMMARY

A light-irradiation multi-sample parallel-reaction apparatus disclosed in Published Japanese Translation of PCT International Publication for Patent Application, No. 2017-529236 can avoid the effect of the heat generated by the mercury lamp in the photocatalytic reaction apparatus disclosed in "Photocatalytic Reaction Apparatus". Further, in the light-irradiation multi-sample parallel-reaction apparatus, it is possible to stir the sample in the reaction vessel by rotating a stir bar around the axis of the cylindrical-shaped reaction vessel. However, it is difficult to efficiently stir the sample with such a stirring method. Especially, when the sample includes water insoluble powder, the powder settles on the bottom of the reaction vessel and the sample cannot be stirred.

The present disclosure has been made in view of the matters mentioned above and has an object is to provide a light irradiation apparatus irradiating a light to a sample in a reaction vessel while stirring the sample more efficiently.

A first aspect of the present disclosure is a light irradiation apparatus including: a rotating stage configured to be rotatable around a first axis that is a central axis thereof; a holding mechanism configured to hold a plurality of reaction vessels on a circumference around the first axis on the rotating stage at equal intervals, a longitudinal direction of the reaction vessel being a direction of the central axis; a plurality of rotation mechanisms configured to hold bottoms of the reaction vessels and rotate the reaction vessels around second axes that are central axes of the reaction vessels, respectively; a plurality of light irradiation mechanisms arranged on a circumference outside of the rotating stage, at least one light emitting diode being disposed in each light irradiation mechanism; and a plurality of stirring mechanisms arranged in the vicinity of the reaction vessels and configured to rotate stir bars placed in the reaction vessels around axes of directions orthogonal to the second axes by magnetic force, respectively. Therefore, it is possible to stir the sample in the reaction vessel in the longitudinal direction of the reaction vessel while irradiating the light.

A second aspect of the present disclosure is the light irradiation apparatus in which it is desirable that, in the above-described light irradiation apparatus, the rotation mechanism has a stirring function to rotate the stir bar placed in the held reaction vessel around the second axis by the magnetic force. Therefore, it is also possible to stir the sample in the reaction vessel around the central axis of the reaction vessel while irradiating the light.

A third aspect of the present disclosure is the light irradiation apparatus in which it is desirable that, in the above-described light irradiation apparatus, the light irradiation mechanism is located to cause a principal surface thereof to face to the first axis. Therefore, it is possible to efficiently irradiate the light to the reaction vessels.

A fourth aspect of the present disclosure is the light irradiation apparatus in which it is desirable that, in the above-described light irradiation apparatus, the light irradiation mechanism is located to cause a normal line passing through a center of the principal surface thereof to be orthogonal to the first axis. Therefore, it is possible to efficiently irradiate the light to the reaction vessels.

A fifth aspect of the present disclosure is the light irradiation apparatus in which it is desirable that, in the above-described light irradiation apparatus, two or more light emitting diodes are arranged on a third axis passing through the center of the principal surface and parallel to the first axis in the light irradiation mechanism. Therefore, it is possible to irradiate the lights from the light emitting diodes to the reaction vessels in a well-balanced manner.

A sixth aspect of the present disclosure is the light irradiation apparatus in which it is desirable that, in the above-described light irradiation apparatus, the two or more light emitting diodes are arranged symmetrically with respect to the third axis and arranged on a fourth axis passing through the center of the principal surface and orthogonal to the third axis in the light irradiation mechanism. Therefore, it is possible to irradiate the lights from the light emitting diodes to the reaction vessels in a well-balanced manner.

A seventh aspect of the present disclosure is the light irradiation apparatus in which it is desirable that, in the above-described light irradiation apparatus, the two or more light emitting diodes are arranged in a matrix in a direction of the third axis and a direction of the fourth axis in the light irradiation mechanism. Therefore, it is possible to irradiate the lights from the light emitting diodes to the reaction vessels in a well-balanced manner.

A eighth aspect of the present disclosure is the light irradiation apparatus in which it is desirable that, in the above-described light irradiation apparatus, when the two or more light emitting diodes are disposed in the light irradiation mechanism, emission wavelengths of the two or more light emitting diodes are the same as each other, emission wavelengths of the two or more light emitting diodes are different from each other, or the two or more light emitting diodes constitute a plurality of groups of light emitting diodes, the light emitting diodes included in each group having the same emission wavelength, emission wavelengths of the groups being different from each other. Therefore, it is possible to flexibly arrange the LED of the appropriate wavelength as appropriate.

A ninth aspect of the present disclosure is the light irradiation apparatus in which it is desirable that, in the above-described light irradiation apparatus, each time each of the reaction vessels revolves once as the rotation stage rotates, the rotation mechanism causes the reaction vessel held thereby to rotate once. Therefore, it is possible to equally irradiate the light to the reaction vessels.

According to the present disclosure, it is possible to provide a light irradiation apparatus irradiating a light to a sample in a reaction vessel while stirring the sample more efficiently.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig 1 schematically illustrates an appearance of a light irradiation apparatus according to a first exemplary embodiment;
Fig. 2 is a perspective view schematically illustrating an internal configuration of the light irradiation apparatus according to the first exemplary embodiment;
Fig. 3 is a top view schematically illustrating a configuration of the light irradiation apparatus according to the first exemplary embodiment;
Fig. 4 schematically illustrates the configuration of the light irradiation apparatus according to the first exemplary embodiment when observed from a IV-IV line in Fig. 3;
Fig. 5 is a perspective view schematically illustrating an arrangement of light irradiation mechanisms;
Fig. 6 is a top view schematically illustrating the arrangement of the light irradiation mechanisms;
Fig. 7 schematically illustrates the arrangement of the light irradiation mechanism;
Fig. 8 illustrates an initial position (0 degree) of a reaction vessel;
Fig. 9 illustrates a position when the reaction vessel rotates by 90 degrees from the initial position;
Fig. 10 illustrates a position when the reaction vessel rotates by 180 degrees from the initial position;
Fig. 11 illustrates a position when the reaction vessel rotates by 270 degrees from the initial position; and
Fig. 12 illustrates rotation of a stir bar in the reaction vessel.

### DESCRIPTION OF EMBODIMENTS

Hereinbelow, exemplary embodiments of the present disclosure are explained with reference to the drawings. The same symbols are assigned to the same elements throughout the drawings and duplicated explanations are omitted as necessary.

### First exemplary embodiment

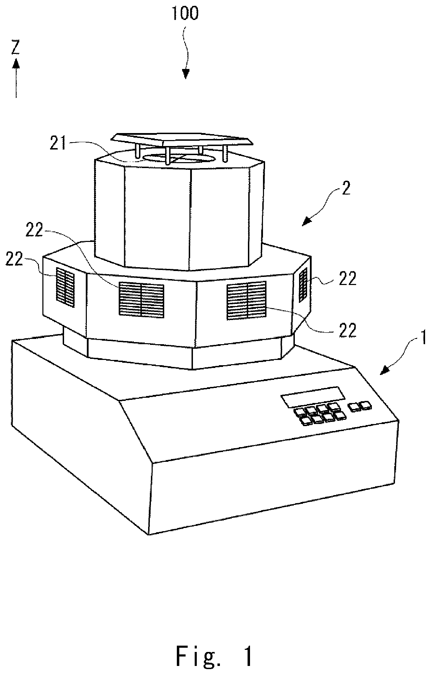

A light irradiation apparatus 100 according to a first exemplary embodiment will be described. Fig 1 schematically illustrates an appearance of the light irradiation apparatus 100 according to the first exemplary embodiment. The light irradiation apparatus 100 is configured in such a manner that various mechanisms disposed on a pedestal 1 are covered with a cover 2 that blocks light. Here, a rotating stage, a holding mechanism, a rotation mechanism, a light irradiation mechanism, and a stirring mechanism are included in the various mechanisms.

For example, the cover 2 includes a fan unit 21 and an exhaust port 22 for cooling internal mechanisms. To prevent leakage of the light irradiated in the cover 2, even when the exhaust port 22 and a window are disposed, it is desirable to make the sizes of those as small as possible. The cover 2 is configured by material capable of blocking light irradiated therein, for example, light of various wavelengths such as ultraviolet ray, visible light, and infrared ray.

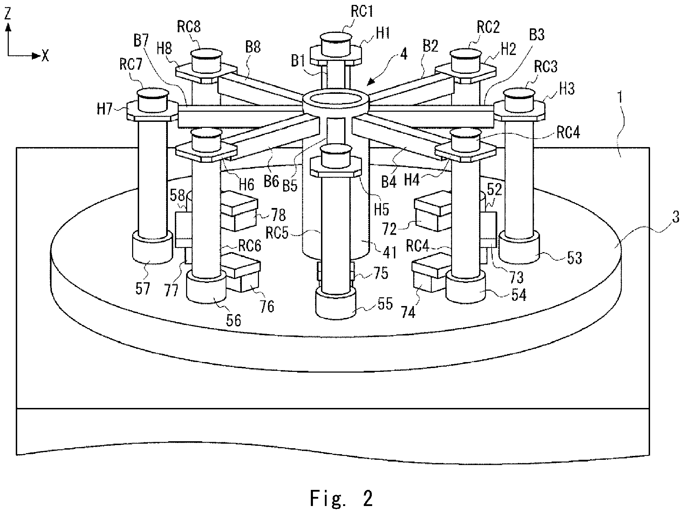

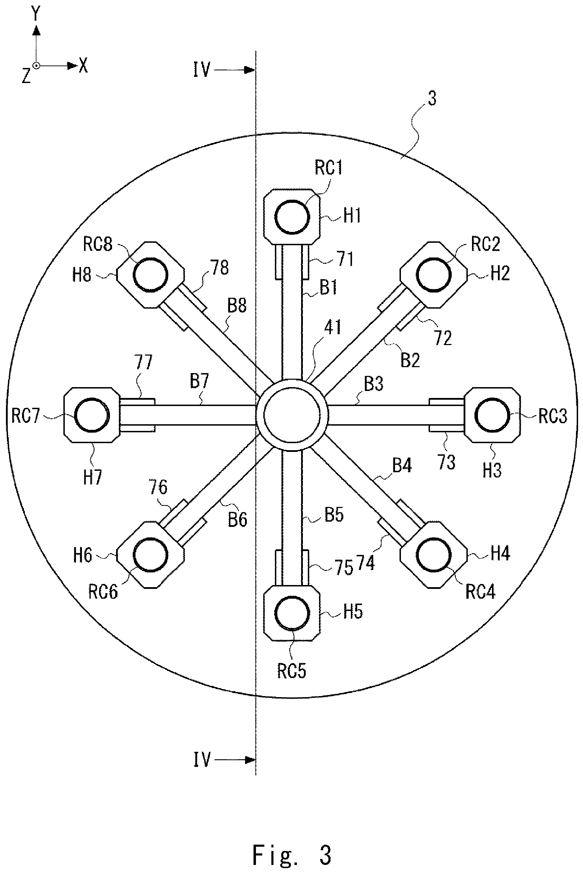

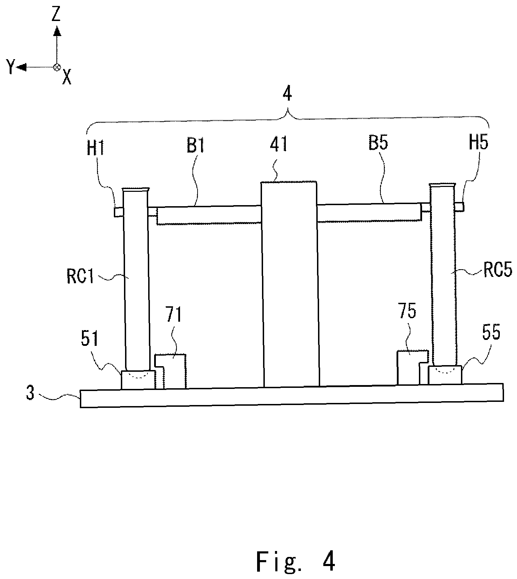

Fig. 2 is a perspective view schematically illustrating an internal configuration of the light irradiation apparatus 100. Fig. 3 is a top view schematically illustrating a configuration of the light irradiation apparatus 100. Fig. 4 schematically illustrates the configuration of the light irradiation apparatus 100 when observed from a IV-IV line in Fig. 3. In Fig. 2, to facilitate understanding of the internal configuration of the light irradiation apparatus 100, the cover 2 and the light irradiation mechanism are omitted. Hereinafter, a direction approximately from left to right on a plane of Fig. 1, a horizontal direction from left to right on planes of Figs. 2 and 3, and a direction from front to back and normal to a plane of Fig. 4 are an X-direction. A direction approximately from front to back of the planes of Figs. 1 and 2, a vertical direction from bottom to top of the plane of Fig. 3, and a horizontal direction from right to left of the plane of Fig. 4 are a Y-direction. A vertical direction from bottom to top of the planes of Figs. 1, 2, and 4, and a direction from back to front and normal to the plane of Fig. 3 are a Z-direction.

A rotating stage 3 whose principal surface is an X-Y plane is disposed on the pedestal 1. The rotating stage 3 can rotate around an axis (Also referred to as a first axis) that is parallel to the Z-direction and passes through the center of the rotating stage 3. Although not illustrated in the drawings, a drive unit such as a motor fixed on the pedestal 1 and connected to a center axis of the rotating stage 3 is disposed under the rotating stage 3, and the rotating stage 3 rotates at a predetermined speed by being driven by the drive unit.

A holding mechanism 4 holding a plurality of reaction vessels is disposed on the rotating stage 3. The reaction vessel used in the present exemplary embodiment has a circular cross-section in the X-Y plane and is a vessel having a cylindrical part whose longitudinal direction is a direction (Z-direction) of a central axis (Also referred to as a second axis) of the circular cross-section. Various vessels such as a test tube and a vial container that are a cylindrical vessel whose one end in the longitudinal direction is closed can be used as the reaction vessel. Various flasks having a cylindrical-shaped neck can be also used as the reaction vessel, for example. Hereinbelow, a case in which eight reaction vessels RC1 to RC8 are used will be described.

The holding mechanism 4 includes a column 41, beams B1 to B8, and holders H1 to H8. The column 41 is a rod-shape member or cylindrical-shaped member, and is disposed on the rotating stage 3 to cause the central axis thereof in the Z-direction to match the rotation axis of the rotating stage 3. The eight beams B1 to B8 radially extend from the rotating stage 3 at equal intervals of 45 degrees. The holders H1 to H8 holding the reaction vessels RC1 to RC8 are disposed at the tips of the beams B1 to B8, respectively. The holders H1 to H8 are configured as members that can rotatably hold the reaction vessels RC1 to RC8, respectively. For example, the holders H1 to H8 are configured as members respectively having holes through which the reaction vessels RC1 to RC8 can be inserted and thereby the reaction vessels RC1 to RC8 can be held.

Note that, in Fig. 4, to facilitate understanding of the configuration, only the configuration regarding the reaction vessels RC1 and RC5 is illustrated.

A bottom of the reaction vessel held by the holding mechanism 4 is held by the rotation mechanism. In this example, rotation mechanisms 51 to 58 hold the bottoms of the reaction vessels RC1 to RC8, respectively. That is, in the top view, the rotation mechanisms 51 to 58 are disposed at positions overlapping with the holders H1 to H8, respectively. The rotation mechanisms 51 to 58 are pillar-shaped members, and each can rotate around the central axis thereof in the Z-direction. Although not illustrated in the drawings, drive units such as motors fixed to the rotating stage 3 and connected to the center axes of the rotation mechanisms 51 to 58 are disposed under the rotating stage 3, and the rotation mechanisms 51 to 58 rotate at the predetermined speed by being driven by the drive units. Since the bottoms of the reaction vessels RC1 to RC8 are respectively contacted with and held by the rotation mechanisms 51 to 58, when the rotation mechanisms 51 to 58 rotate, the reaction vessels RC1 to RC8 also rotate, that is, rotate around own axes, respectively.

The relative positional relationship between the rotating stage 3, the holding mechanism 4, and the rotation mechanisms 51 to 58 does not change even when the rotating stage 3 rotates. Therefore, when the rotating stage 3 rotates, the reaction vessels RC1 to RC8 also rotate, that is, revolve around the central axis of the rotating stage 3, respectively.

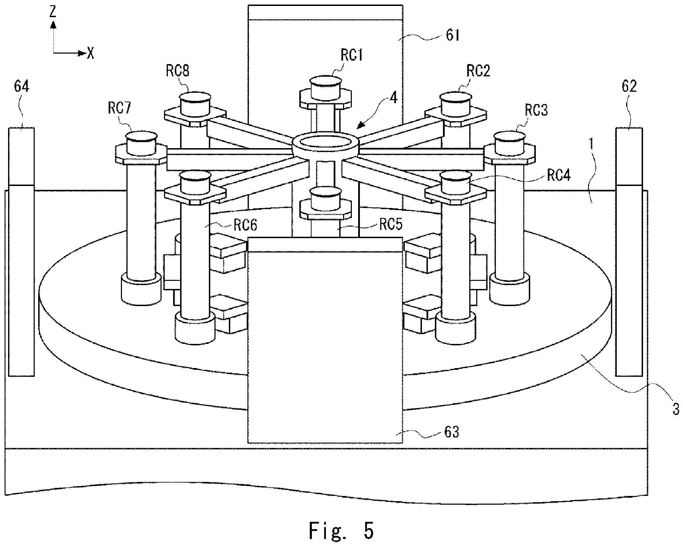

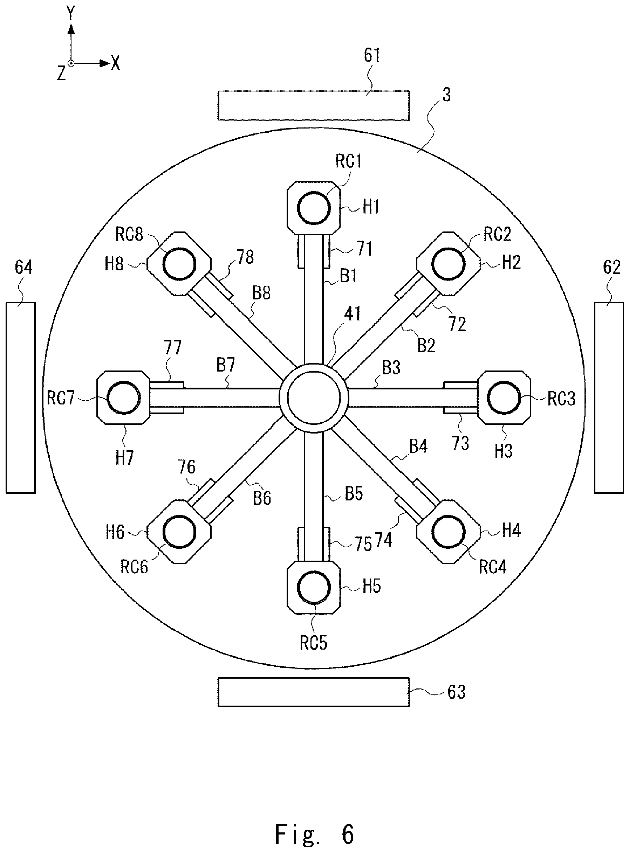

A plurality of light irradiation mechanisms are disposed on the pedestal 1 outside of the rotating stage 3. Fig. 5 is a perspective view schematically illustrating an arrangement of the light irradiation mechanisms. Fig. 6 is a top view schematically illustrating the arrangement of the light irradiation mechanisms. The light irradiation mechanisms are arranged on a circumference outside of the rotating stage 3 at equal intervals. In the present exemplary embodiment, four light irradiation mechanisms 61 to 64 are arranged on the circumference outside of the rotating stage 3 at equal intervals of 90 degrees. In this example, the light irradiation mechanisms 61 and 63 are arranged to face each other with the rotation axis of the rotation stage 3 (i.e. Central axis of Column 41) interposed therebetween. The light irradiation mechanisms 62 and 64 are arranged to face each other with the rotation axis of the rotation stage 3 (i.e. Central axis of Column 41) interposed therebetween.

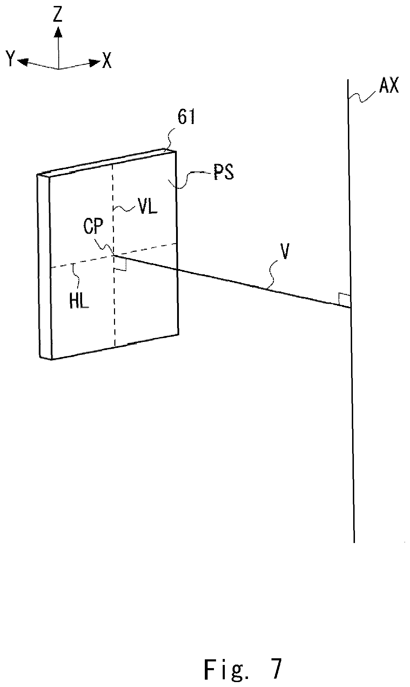

One or more LEDs (Light emitting diodes) are disposed in each of the light irradiation mechanisms 61 to 64. A configuration of the light irradiation mechanism 61 will be described as a representative example. Fig. 7 schematically illustrates an arrangement of the light irradiation mechanism 61. In the light irradiation mechanism 61, a principal surface PS of the light irradiation mechanism 61 in which one or more LEDs are disposed is arranged to face the rotation axis AX of the rotating stage 3 (i.e. Central axis AX of Column 41). In order to effectively irradiate the light of the LED to the reaction vessels, it is desirable that the light irradiation mechanism 61 is arranged in such a manner that a normal line V of the principal surface PS passing through the center CP of the principal surface PS is orthogonal to the rotation axis AX of the rotating stage 3 (i.e. Central axis AX of Column 41).

It is desirable that the LED is arranged in such a manner that a normal line of a light-emitting face is parallel to the normal line V of the principal surface PS. Further, it is desirable that the LED is arranged on a vertical line VL (Also referred to as a third axis) passing through the center CP of the principal surface PS and parallel to the Z-direction. When disposing two or more LEDs, it is desirable that the LEDs are arranged in a line on the vertical line VL of the principal surface PS. Thus, the two or more LEDs can irradiate the lights to the adjacent reaction vessels in the same manner.

Further, the two or more LEDs may be arranged in a line on a horizontal line HL (Also referred to as a fourth axis) orthogonal to the vertical line VL on the principal surface PS. In this case, to equalize lights irradiated from two areas divided by the vertical line VL, it is desirable that the two or more LEDs are symmetrically arranged with respect to the vertical line VL.

It should be appreciated that the LEDs may be two-dimensionally arranged in the direction of the horizontal line HL and the direction of the vertical line VL, that is, may be arranged in a matrix.

Wavelengths of the two or more LEDs may be the same as or different from each other. The two or more LEDs may constitute two or more groups of LEDs and each group may include a predetermined number of the same wavelength LEDs.

Although the configuration of the light irradiation mechanism 61 has been described above, the same applies to the light irradiation mechanisms 62 to 64, and thus the description thereof will be omitted.

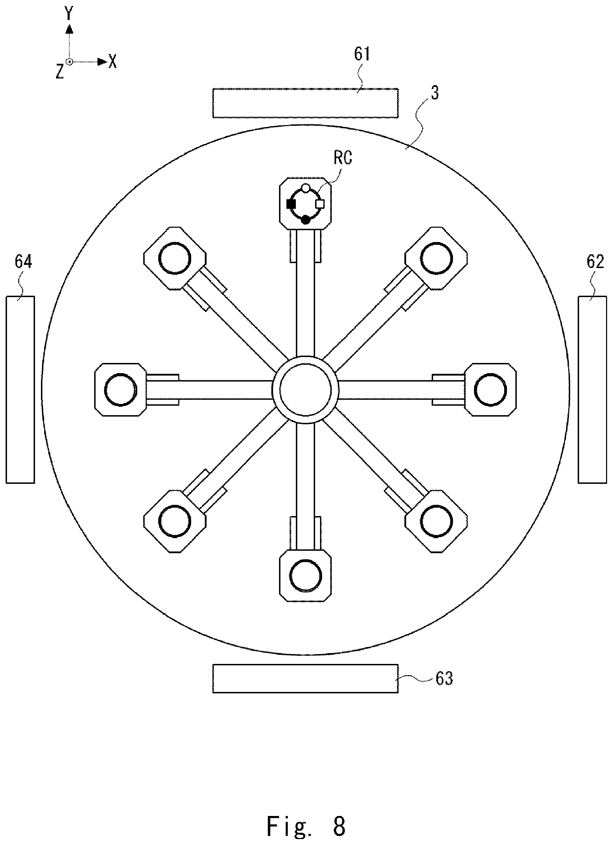

Here, the rotation and revolution of the reaction vessel will be further described. In the present exemplary embodiment, the reaction vessel rotates once for each revolution. Thus, four points that are separated from each other by 90 degrees on the outer circumstance of the circular cross section of each reaction vessel rotate and revolve to sequentially approach the light irradiation mechanism. Figs. 8 to 11 illustrate an initial position (0 degree) of the reaction vessels and positions when the reaction vessels rotate by 90, 180, and 270 degrees from the initial position, respectively. In Figs. 8 to 11, the points separated by 90 degrees are represented by a white circle, a white square, a black circle, and a black square in a clockwise direction on an outer circumstance of a focused reaction vessel RC. In Figs. 8 to 11, a revolution direction and a rotation direction are the clockwise direction.

At the initial position (0 degree) of Fig. 8, the white circle of the reaction vessel RC is located at a potion closest to the light irradiation mechanism 61.

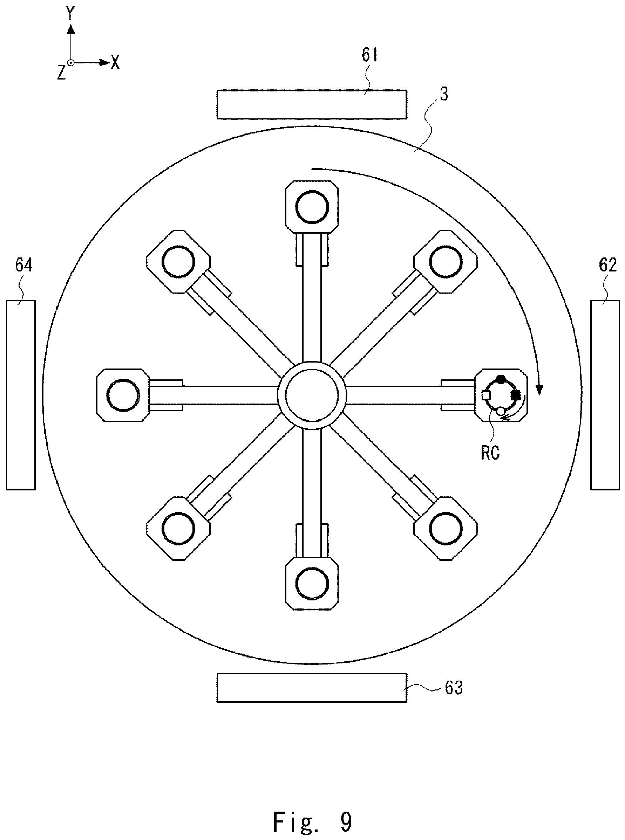

As illustrated in Fig. 9, when the reaction vessel RC has rotated by 90 degrees in the clockwise direction from the initial position, the black square of the reaction vessel RC is the closet to the light irradiation mechanism 62.

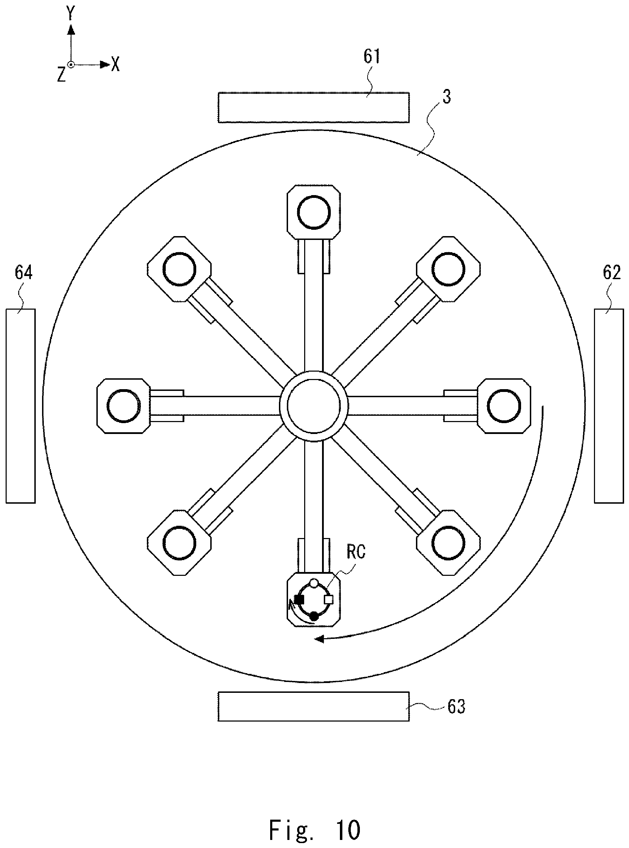

As illustrated in Fig. 10, when the reaction vessel RC has rotated by 180 degrees in the clockwise direction from the initial position, the black circle of the reaction vessel RC is the closet to the light irradiation mechanism 63.

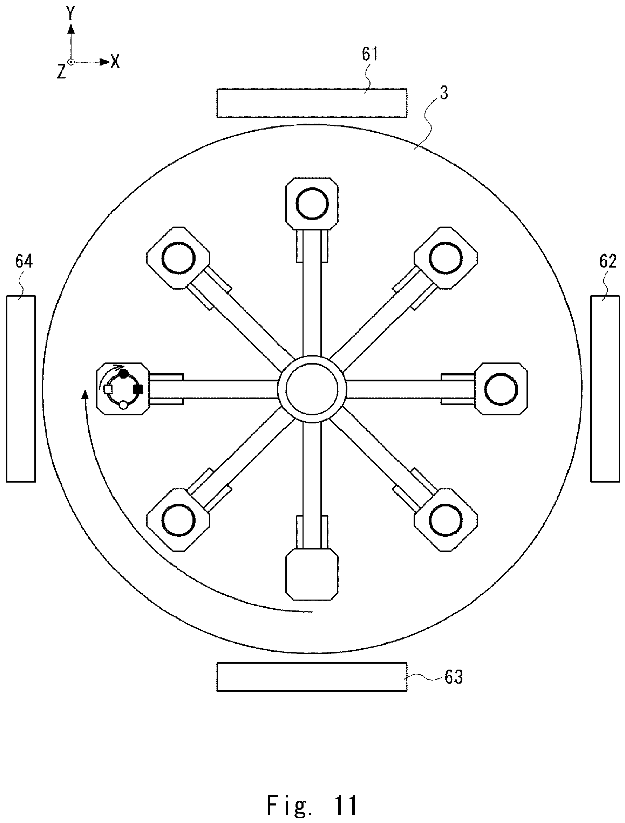

As illustrated in Fig. 11, when the reaction vessel RC has rotated by 270 degrees in the clockwise direction from the initial position, the white square of the reaction vessel RC is the closet to the light irradiation mechanism 64.

As described above, according to the present configuration, it is possible to equally irradiate the light to each reaction vessel from all directions. Since each reaction vessel revolves and rotates in the same manner, it is possible to cause light irradiation states on the reaction vessels to be equalized. Thus, experimental environments in respective reaction vessels can be averaged.

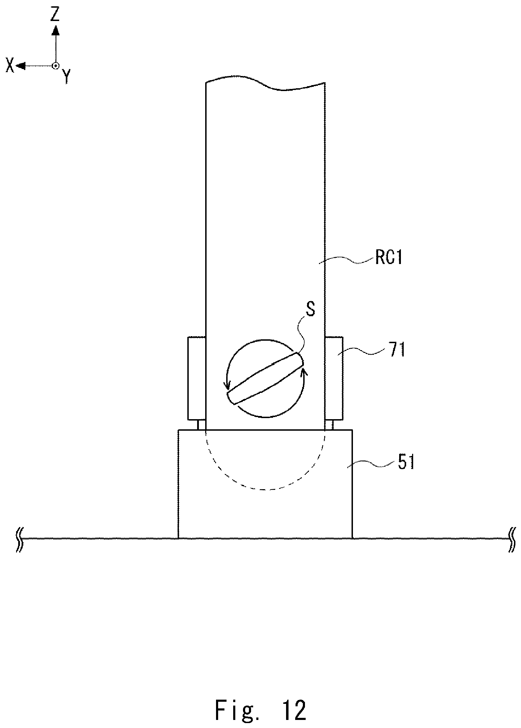

Subsequently, the configuration of the light irradiation apparatus 100 will be described. A plurality of stirring mechanisms rotating stir bars placed in the reaction vessels are disposed on the rotating stage 3. In this example, stirring mechanisms 71 to 78 are placed near the rotation mechanisms 51 to 58, respectively. The stirring mechanisms 71 to 78 rotate stir bars S on the bottoms of the reaction vessels RC1 to RC8 by magnetic force around rotation axes orthogonal to the central axes of the reaction vessels RC1 to RC8, respectively. Fig. 12 illustrates the rotation of the stir bar S in the reaction vessel RC1. As illustrated in Fig. 12, the stir bar S on the bottom of the reaction vessel RC1 rotates around the Y-direction orthogonal to the central axis of the reaction vessel RC1 (Z-direction) by the stirring mechanism 71. Regarding the rotation of the stir bar, the same applies to the stirring mechanisms 72 to 78.

As described above, the light-irradiation multi-sample parallel-reaction apparatus of "Photocatalytic Reaction Apparatus" has a stirrer function for rotating the stir bar in the reaction vessel. However, this stirrer function is a general one for rotating the stir bar around the central axis of the reaction vessel. Thus, when the sample includes water insoluble powder, the powder settles on the bottom of the reaction vessel and the sample cannot be stirred.

In contrast, according to the present configuration, since the stir bar can be stirred around the rotation axis orthogonal to the central axis of the reaction vessel, the sample can be stirred in the longitudinal direction (Vertical direction) of the reaction vessel. Thus, even when the sample includes the powder, the stirring can be efficiently performed without settling of the powder. Therefore, it is possible to efficiently perform chemical reactions to which the powder relates.

Further, according to the present configuration, since the LED is used as an illumination light source, heat generation can be reduced as compared to the mercury lamp. Thus, it is possible to keep the experimental environment in the reaction vessel at a more constant temperature by air cooling. Further, it is possible to miniaturize the mechanism for cooling and thus to miniaturize to the light irradiation apparatus 100.

### Other exemplary embodiments

Note that the present disclosure is not limited to the exemplary embodiments mentioned above and can be modified as appropriate without departing from the gist of the present disclosure. For example, although the configuration in which the eight reaction vessels, the eight rotation mechanisms, and the eight stirring mechanisms are disposed has been described in the exemplary embodiment described above, it is merely an example. Any number at least two of the reaction vessels, any number at least two of the rotation mechanisms, and any number at least two of the stirring mechanisms may be disposed. In this case, M reaction vessels are located at positions on the circumstances separated at equal intervals of 360/M degrees, where M is an integer of two or more. Likewise, M rotation mechanisms and M stirring mechanisms are located at the positions on the circumstances separated at the equal intervals of 360/M degrees.

Although the configuration in which four light irradiation mechanisms are disposed has been described in the exemplary embodiment described above, it is merely an example. In this case, any number at least two of the light irradiation mechanisms may be disposed. It is desirable that N light irradiation mechanisms are located at positions on the circumstances separated at equal intervals of 360/N degrees, where N is an integer of two or more.

Although the configuration in which the stirring mechanisms 71 to 78 are disposed on the side of the column 41 when observed from the reaction vessels RC1 to RC8 has been described in the exemplary embodiment described above, it is merely an example. As long as the stir bar S can be rotated around the direction orthogonal to the central axis of the reaction vessel, the stirring mechanisms 71 to 78 may be located at any positions in the vicinity of the reaction vessels RC1 to RC8, respectively.

The rotation mechanisms 51 to 58 may have functions of drive units of magnetic stirrer to cause the stir bars S on the bottoms of the reaction vessels RC1 to RC8 around the central axes of the reaction vessels RC1 to RC8 by magnetic force, respectively. Thus, it is also possible to rotate the stir bars S around the rotation axes of the directions different from those of the stirring mechanisms 71 to 78.

Although the rod-shaped stir bar having the circular cross section has been illustrated as the stir bar S in Fig. 11 in the exemplary embodiment described above, it is merely an example. Various stir bars such as an oval-shaped or football-shaped stir bar, a triangle stir bar having a triangle cross section, a disc-shaped stir bar (e.g. cross head stir bar), rod-shaped stir bar having another cross section (e.g. octagon stir bar), and a cross stir bar bay be used as the stir bar S.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A light irradiation apparatus comprising:
a rotating stage configured to be rotatable around a first axis that is a central axis thereof;
a holding mechanism configured to hold a plurality of reaction vessels on a circumference around the first axis on the rotating stage at equal intervals, a longitudinal direction of the reaction vessel being a direction of the central axis;
a plurality of rotation mechanisms configured to hold bottoms of the reaction vessels and rotate the reaction vessels around second axes that are central axes of the reaction vessels, respectively;
a plurality of light irradiation mechanisms arranged on a circumference outside of the rotating stage, at least one light emitting diode being disposed in each light irradiation mechanism; and
a plurality of stirring mechanisms arranged in the vicinity of the reaction vessels and configured to rotate stir bars placed in the reaction vessels around axes of directions orthogonal to the second axes by magnetic force, respectively.

2. The light irradiation apparatus according to Claim 1, wherein the rotation mechanism has a stirring function to rotate the stir bar placed in the held reaction vessel around the second axis by the magnetic force.

3. The light irradiation apparatus according to Claim 1 or 2, wherein the light irradiation mechanism is located to cause a principal surface thereof to face to the first axis.

4. The light irradiation apparatus according to Claim 3, wherein the light irradiation mechanism is located to cause a normal line passing through a center of the principal surface thereof to be orthogonal to the first axis.

5. The light irradiation apparatus according to Claim 3, wherein two or more light emitting diodes are arranged on a third axis passing through the center of the principal surface and parallel to the first axis in the light irradiation mechanism.

6. The light irradiation apparatus according to Claim 5, wherein the two or more light emitting diodes are arranged symmetrically with respect to the third axis and arranged on a fourth axis passing through the center of the principal surface and orthogonal to the third axis in the light irradiation mechanism.

7. The light irradiation apparatus according to Claim 6, wherein the two or more light emitting diodes are arranged in a matrix in a direction of the third axis and a direction of the fourth axis in the light irradiation mechanism.

8. The light irradiation apparatus according to any one of Claims 5 to 8, wherein
when the two or more light emitting diodes are disposed in the light irradiation mechanism,
emission wavelengths of the two or more light emitting diodes are the same as each other,
emission wavelengths of the two or more light emitting diodes are different from each other, or
the two or more light emitting diodes constitute a plurality of groups of light emitting diodes, the light emitting diodes included in each group having the same emission wavelength, emission wavelengths of the groups being different from each other.

9. The light irradiation apparatus according to any one of Claims 1 to 8, wherein, each time each of the reaction vessels revolves once as the rotation stage rotates, the rotation mechanism causes the reaction vessel held thereby to rotate once.
